# EUROPEAN PATENT SPECIFICATION

(11) **EP 2 867 326 B1**
(45) Date of publication and mention of the grant of the patent: **02.11.2016**
(21) Application number: 13736708.2
(22) Date of filing: 27.06.2013
(51) Int. Cl.: C09K 8/42, C09K 8/40, C04B 28/02, C09K 8/467, C04B 103/40

(54) **FOAMED SPACER FLUIDS CONTAINING CEMENT KILN DUST AND METHODS OF USE**
GESCHÄUMTE DISTANZFLÜSSIGKEITEN MIT ZEMENTOFENSTAUB UND VERFAHREN ZUR VERWENDUNG DAVON
FLUIDES-MOUSSES DE SÉPARATION CONTENANT DE LA POUSSIÈRE DE FOURS À CIMENT ET PROCÉDÉS D'UTILISATION

(30) Priority: 27.06.2012 US 201213535145
(43) Date of publication of application: 06.05.2015
(60) Divisional application: 16187134.8
(73) Proprietor: Halliburton Energy Services, Inc., Houston, TX 77072 (US)
(72) Inventor: BENKLEY, James Robert, Duncan, Oklahoma 73533 (US); SPENCER, Joseph V., Pampa, Texas 79065 (US); KRANZ, Zachary Robert, Pampa, Texas 79065 (US); GARRISON, Christopher Jay, Panhandle, Texas 79068 (US); BRENNEIS, D. Chad, Marlow, Oklahoma 73055 (US); RODDY, Craig W., Duncan, Oklahoma 73533 (US)
(74) Representative: Cottrill, Emily Elizabeth Helen
(86) International application number: PCT/US2013/048092
(87) International publication number: WO 2014/004773

(56) References cited:
- WO-A1-2007/048999
- WO-A1-2012/156663
- US-A1- 2009 200 029
- US-A1- 2012 145 393
- US-B1- 6 668 927

## Description

### BACKGROUND

The present invention relates to spacer fluids for use in subterranean operations and, more particularly, in certain embodiments, to foamed spacer fluids comprising cement kiln dust ("CKD") and methods of use in subterranean formations.

Spacer fluids are often used in subterranean operations to facilitate improved displacement efficiency when introducing new fluids into a well bore. For example, a spacer fluid can be used to displace a fluid in a well bore before introduction of another fluid. When used for drilling fluid displacement, spacer fluids can enhance solids removal as well as separate the drilling fluid from a physically incompatible fluid, For instance, in primary cementing operations, the spacer fluid may be placed into the well bore to separate the cement composition from the drilling fluid. Spacer fluids may also be placed between different drilling fluids during drilling change outs or between a drilling fluid and a completion brine, for example.

To be effective, the spacer fluid can have certain characteristics. For example, the spacer fluid may be compatible with the drilling fluid and the cement composition. This compatibility may also be present at downhole temperatures and pressures, in some instances, it is also desirable for the spacer fluid to leave surfaces in the well bore water wet, thus facilitating bonding with the cement composition. Rheology of the spacer fluid can also be important. A number of different rheological properties may be important in the design of a spacer fluid, including yield point, plastic viscosity, gel strength, and shear stress, among others. While rheology can be important in spacer fluid design, conventional spacer fluids may not have the desired rheology at downhole temperatures. For instance, conventional spacer fluids may experience undesired thermal thinning at elevated temperatures. As a result, conventional spacer fluids may not provide the desired displacement in some instances.

US 2012/145393, discloses a method comprising providing a foamed spacer fluid comprising cement kiln dust a foaming agent, a gas and water.

### SUMMARY

The present invention relates to spacer fluids for use in subterranean operations and, more particularly, in certain embodiments, to foamed spacer fluids comprising CKD and methods of use in subterranean formations.

An embodiment discloses a method comprising: providing a foamed spacer fluid comprising CKD, a foaming agent, a gas, and water; and introducing the foamed spacer fluid into a well bore to displace at least a portion of a first fluid present in the well bore wherein the yield point of the foamed spacer fluid at 180°F (82°C) is greater than 20 1b/100 ft² (0.98 kg/m²).

There is also described a method comprising: providing a foamed spacer fluid comprising a partially calcined kiln feed removed from a gas stream, a foaming agent, a gas, and water, wherein the partially calcined kiln feed comprises SiO₂, Al₂O₃, Fe₂O₃, CaO, MgO, SO_{3,} Na₂O, and K₂O; and introducing the foamed spacer fluid into a well bore to displace at least a portion of a first fluid present in the well bore.

There is also described a foamed spacer fluid comprising: CKD, a foaming agent, a gas, and water, wherein the foamed spacer fluid has: a higher yield point at 130°F (54°C) than at 80° F (27°C), a higher yield point at 180° F (82°C) than at 80° F (27°C), and/or a higher plastic viscosity at 180°F (82°C) than at 80° F (27°C).

The features and advantages of the present invention will be readily apparent to those skilled in the art.

### DESCRIPTION OF PREFERRED EMBODIMENTS

The present invention relates to spacer fluids for use in subterranean operations and, more particularly, in certain embodiments, to foamed spacer fluids that comprise CKD and methods that use CKD for enhancing one or more rheological properties of a spacer fluid. There may be several potential advantages to the methods and compositions of the present invention, only some of which may be alluded to herein. One of the many potential advantages of the methods and compositions of the present invention is that the CKD may be used in spacer fluids as a rheology modifier allowing formulation of a spacer fluid with desirable rheological properties. Another potential advantage of the methods and compositions of the present invention is that inclusion of the CKD in the spacer fluids may result in a spacer fluid without undesired thermal thinning. Yet another potential advantage of the present invention is that spacer fluids comprising CKD may be more economical than conventional spacer fluids, which are commonly prepared with higher cost additives. Yet another potential advantage of the present invention is that foamed spacer fluids comprising CKD may be used for displacement of lightweight drilling fluids.

Embodiments of the spacer fluids of the present invention may comprise water and CKD. In some embodiments, the spacer fluids may be foamed. For example, the foamed spacer fluids may comprise water, CKD, a foaming agent, and a gas. A foamed spacer fluid may be used, for example, where it is desired for the spacer fluid to be lightweight. In accordance with present embodiments, the spacer fluid may be used to displace a first fluid from a well bore with the spacer fluid having a higher yield point than the first fluid. For example, the spacer fluid may be used to displace at least a portion of a drilling fluid from the well bore. Other optional additives may also be included in embodiments of the spacer fluids as desired for a particular application. For example, the spacer fluids may further comprise viscosifying agents, organic polymers, dispersants, surfactants, weighting agents, and any combination thereof.

The spacer fluids generally should have a density suitable for a particular application as desired by those of ordinary skill in the art, with the benefit of this disclosure. In some embodiments, the spacer fluids may have a density in the range of from about 4 pounds per gallon ("lb/gal") (0.48 kg/l) to about 24 lb/gal (2.9 kg/l). In other embodiments, the spacer fluids may have a density in the range of about 4 lb/gal (0.48 kg/l) to about 17 lb/gal (2 kg/l). In yet other embodiments, the spacer fluids may have a density in the range of about 8 lb/gal (0.96 kg/l) to about 13 lb/gal (1.6 kg/l). Embodiments of the spacer fluids may be foamed or unfoamed or comprise other means to reduce their densities known in the art, such as lightweight additives. Those of ordinary skill in the art, with the benefit of this disclosure will recognize the appropriate density for a particular application.

The water used in an embodiment of the spacer fluids may include, for example, freshwater, saltwater (e.g., water containing one or more salts dissolved therein), brine (e.g., saturated saltwater produced from subterrancan formations), seawater, or any combination thereof. Generally, the water may be from any source, provided that the water does not contain an excess of compounds that may undesirably affect other components in the spacer fluid. The water is included in an amount sufficient to form a pumpable spacer fluid. In some embodiments, the water may be included in the spacer fluids in an amount in the range of from about 15% to about 95% by weight of the spacer fluid. In other embodiments, the water may be included in the spacer fluids of the present invention in an amount in the range of from about 25% to about 85% by weight of the spacer fluid. One of ordinary skill in the art, with the benefit of this disclosure, will recognize the appropriate amount of water to include for a chosen application.

The CKD may be included in embodiments of the spacer fluids as a rheology modifier. Among other things, using CKD in embodiments of the present invention can provide spacer fluids having rheology suitable for a particular application. Desirable rheology may be advantageous to provide a spacer fluid that is effective for drilling fluid displacement, for example. In some instances, the CKD can be used to provide a spacer fluid with a low degree of thermal thinning. For example, the spacer fluid may even have a yield point that increases at elevated temperatures, such as those encountered downhole.

CKD is a material generated during the manufacture of cement that is commonly referred to as cement kiln dust. The term "CKD" is used herein to mean cement kiln dust as described herein and equivalent forms of cement kiln dust made in other ways. The term "CKD" typically refers to a partially calcined kiln feed which can be removed from the gas stream and collected, for example, in a dust collector during the manufacture of cement. Usually, large quantities of CKD are collected in the production of cement that are commonly disposed of as waste. Disposal of the waste CKD can add undesirable costs to the manufacture of the cement, as well as the environmental concerns associated with its disposal. Because the CKD is commonly disposed as a waste material spacer fluids prepared with CKD may be more economical than conventional spacer fluids, which are commonly prepared with higher cost additives. The chemical analysis of CKD from various cement manufactures varies depending on a number of factors, including the particular kiln feed, the efficiencies of the cement production operation, and the associated dust collection systems. CKD generally may comprise a variety of oxides, such as SiO₂, Al₂O₃, Fe₂O₃, CaO, MgO, SO₃, Na₂O, and K₂O.

The CKD may be included in the spacer fluids in an amount sufficient to provide for example, the desired rheological properties. In some embodiments, the CKD may be present in the spacer fluids in an amount in the range of from about 1% to about 65% by weight of the spacer fluid (e.g.. about 1%, about 5%. about 10%, about 15%, about 20% about 25%, about 30%, about 35%, about 40%, about 45%, about 50%, about 55%, about 60%, about 65%, etc.). In some embodiments, the CKD may be present in the spacer fluids in an amount in the range of from about 5% to about 60% by weight of the spacer fluid. In some embodiments, the CKD may be present in an amount in the range of from about 20% to about 35% by weight of the spacer fluid. Alternatively, the amount of CKD may be expressed by weight of dry solids. As used herein, the term "by weight dry solids" refer to the amount of a component, such as CKD, relative to the overall amount of dry solids used in preparation of the spacer fluid. For example, the CKD may be present in an amount in a range of from about 1% to 100% by weight of dry solids (e.g., about 1%, about 5%, about 10%, about 20%. about 30%, about 40%, about 50%, about 60%, about 70%, about 80%, about 90%, 100%, etc.). In some embodiments, the CKD may be present in an amount in the range of from about 50% to 100% and, alternatively, from about 80% to 100% by weight of dry solids. One of ordinary skill in the art, with the benefit of this disclosure, will recognize the appropriate amount of CKD to include for a chosen application.

While the preceding description describes CKD, the present invention is broad enough to encompass the use of other partially calcined kiln feeds. For example, embodiments of the spacer fluids may comprise lime kiln dust, which is a material that is generated during the manufacture of lime. The term lime kiln dust typically refers to a partially calcined kiln feed which can be removed from the gas stream and collected, for example, in a dust collector during the manufacture of lime. The chemical analysis of lime kiln dust from various lime manufactures varies depending on a number of factors, including the particular limestone or dolomitic limestone feed, the type of kiln, the mode of operation of the kiln, the efficiencies of the lime production operation, and the associated dust collection systems. Lime kiln dust generally may comprise varying amounts of free lime and free magnesium, lime stone, and/or dolomitic limestone and a variety of oxides, such as SiO₂, Al₂O₃, Fe₂O₃, CaO, MgO, SO₃, Na₂O, and K₂O, and other components, such as chlorides.

Optionally, embodiments of the spacer fluids may further comprise fly ash. A variety of fly ashes may be suitable, including fly ash classified as Class C or Class F fly ash according to American Petroleum Institute, API Specification for Materials and Testing for Well Cement, API Specification 10, Fifth Ed., July 1, 1990. Suitable examples of flay ash include, but are not limited to, POZMIX^{®} A cement additive, commercially available from Halliburton Energy Services, Inc., Duncan, Oklahoma. Where used, the fly ash generally may be included in the spacer fluids in an amount desired for a particular application. In some embodiments, the fly ash may be present in the spacer fluids in an amount in the range of from about 1% to about 60% by weight of the spacer fluid (e.g., about 5%, about 10%, about 15%, about 20%, about 25%, about 30%, about 35%, about 40%, about 45%, about 50%, about 55%, etc.). In some embodiments, the fly ash may be present in the spacer fluids in an amount in the range of from about 1% to about 35% by weight of the spacer fluid. In some embodiments, the fly ash may be present in the spacer fluids in an amount in the range of from about 1% to about 10% by weight of the spacer fluid. Alternatively, the amount of fly ash may be expressed by weight of dry solids. For example, the fly ash may be present in an amount in a range of from about 1% to about 99% by weight of dry solids (e.g., about 1%, about 5%, about 10%, about 20%, about 30%, about 40%, about 50%, about 60%, about 70%, about 80%, about 90%, about 99%, etc.). In some embodiments, the fly ash may be present in an amount in the range of from about 1% to about 20% and, alternatively, from about 1% to about 10% by weight of dry solids. One of ordinary skill in the art, with the benefit of this disclosure, will recognize the appropriate amount of the fly ash to include for a chosen application.

Optionally, embodiments of the spacer fluids may further comprise a free water control additive. As used herein, the term "free water control additive" refers to an additive included in a liquid for, among other things, reducing (or preventing) the presence of free water in the liquid. Free water control additive may also reduce (or prevent) the settling of solids. Examples of suitable free water control additives include, but are not limited to, bentonite, amorphous silica, hydroxyethyl cellulose, and combinations thereof. An example of a suitable free water control additive is SA-1015™ suspending agent, available from Halliburton Energy Services, Inc. Another examples of a suitable free water control additive is WG-17™ solid additive, available from Halliburton Energy Services, Inc. The free water control additive may be provided as a dry solid in some embodiments. Where used, the free water control additive may be present in an amount in the range of from about 0.1% to about 16% by weight of dry solids, for example. In alternative embodiments, the free water control additive may be present in an amount in the range of from about 0.1% to about 2% by weight of dry solids.

In some embodiments, the spacer fluids may further comprise a lightweight additive. The lightweight additive may be included to reduce the density of embodiments of the spacer fluids. For example, the lightweight additive may be used to form a lightweight spacer fluid, for example, having a density of less than about 13 lb/gal (1.6 kg/l). The lightweight additive typically may have a specific gravity of less than about 2.0. Examples of suitable lightweight additives may include sodium silicate, hollow microspheres, gilsonite, perlite, and combinations thereof. An example of a suitable sodium silicate is ECONOLITE™ additive, available from Halliburton Energy Services, Inc. Where used, the lightweight additive may be present in an amount in the range of from about 0.1% to about 20% by weight of dry solids, for example. In alternative embodiments, the lightweight additive may be present in an amount in the range of from about 1% to about 10% by weight of dry solids.

As previously mentioned, embodiments of the spacer fluids may be foamed with a gas, for example, to provide a spacer fluid with a reduced density. It should be understood that reduced densities may be needed for embodiments of the spacer fluids to more approximately match the density of a particular drilling fluid, for example, where lightweight drilling fluids are being used. A drilling fluid may be considered lightweight if it has a density of less than about 13 lb/gal (1.6 kg/l), alternatively, less than about 10 lb/gal (1.2 kg/l), and alternatively less than about 9 lb/gal (1.1 kg/l In some embodiments, the spacer fluids may be foamed to have a density within about 10% of the density of the drilling fluid and, alternatively, within about 5% of the density of the drilling fluid. While techniques, such as lightweight additives, may be used to reduce the density of the spacer fluids comprising CKD without foaming, these techniques may have drawbacks. For example, reduction of the spacer fluid's density to below about 13 lb/gal (1.6 kg/l) using lightweight additives may produce unstable slurries, which can have problems with settling of solids, floating of lightweight additives, and free water, among others. Accordingly, the spacer fluid may be foamed to provide a spacer fluid having a reduced density that is more stable.

Therefore, in some embodiments, the spacer fluids may be foamed and comprise water, CKD, a foaming agent, and a gas. Optionally, to provide a spacer fluid with a lower density and more stable foam, the foamed spacer fluid may further comprise a lightweight additive, for example. With the lightweight additive, a base slurry may be prepared that may then be foamed to provide an even lower density. In some embodiments, the foamed spacer fluid may have a density in the range of from about 4 lb/gal (0.48 kg/l) to about 13 lb/gal (1.6 kg/l) and, alternatively, about 7 lb/gal (0.84 kg/l) to about 9 lb/gal (1.1 kg/l). In one particular embodiment, a base slurry may be foamed from a density of in the range of from about 9 lb/gal (1.1 kg/l) to about 13 lb/gal (1.6 kg/l) to a lower density, for example, in a range, of from about 7 lb/gal (0.84 kg/l) to about 9 lb/gal (1.1 kg/l).

The gas used in embodiments of the foamed spacer fluids may be any suitable gas for foaming the spacer fluid, including, but not limited to air, nitrogen, and combinations thereof. Generally, the gas should be present in embodiments of the foamed spacer fluids in an amount sufficient to form the desired foam. In certain embodiments, the gas may be present in an amount in the range of from about 5% to about 80% by volume of the foamed spacer fluid at atmospheric pressure, alternatively, about 5% to about 55% by volume, and, alternatively, about 15% to about 30% by volume.

Where foamed, embodiments of the spacer fluids may comprise a foaming agent for providing a suitable foam. As used herein, the term "foaming agent" refers to a material or combination of materials that facilitate the formation of a foam in a liquid. Any suitable foaming agent for forming a foam in an aqueous liquid may be used in embodiments of the spacer fluids. Examples of suitable foaming agents may include, but are not limited to: mixtures of an ammonium salt of an alkyl ether sulfate, a cocoamidopropyl betaine surfactant, a cocoamidopropyl dimethylamine oxide surfactant, sodium chloride, and water; mixtures of an ammonium salt of an alkyl ether sulfate surfactant, a cocoamidopropyl hydroxysultaine surfactant, a cocoamidopropyl dimethylamine oxide surfactant, sodium chloride, and water; hydrolyzed keratin; mixtures of an ethoxylated alcohol ether sulfate surfactant, an alkyl or alkene amidopropyl betaine surfactant, and an alkyl or alkene dimethylamine oxide surfactant; aqueous solutions of an alpha-olefinic sulfonate surfactant and a betaine surfactant; and combinations thereof. An example of a suitable foaming agent is FOAMER™ 760 foamer/stabilizer, available from Halliburton Energy Services, Inc. Suitable foaming agents are described in U.S. Patent Nos. 6,797,054, 6,547,871, 6,367,550, 6,063,738, and 5,897,699.

Generally, the foaming agent may be present in embodiments of the foamed spacer fluids in an amount sufficient to provide a suitable foam. In some embodiments, the foaming agent may be present in an amount in the range of from about 0.8% to about 5% by volume of the water ("bvow").

A wide variety of additional additives may be included in the spacer fluids as deemed appropriate by one skilled in the art, with the benefit of this disclosure. Examples of such additives include, but are not limited to, weighting agents, viscosifying agents (e.g., clays, hydratable polymers, guar gum), fluid loss control additives, lost circulation materials, filtration control additives, dispersants, defoamers, corrosion inhibitors, scale inhibitors, formation conditioning agents. Specific examples of these, and other, additives include organic polymers, surfactants, crystalline silica, amorphous silica, fumed silica, salts, fibers, hydratable clays, microspheres, rice husk ash, combinations thereof, and the like. A person having ordinary skill in the art, with the benefit of this disclosure, will readily be able to determine the type and amount of additive useful for a particular application and desired result.

Embodiments of the spacer fluids of the present invention may be prepared in accordance with any suitable technique. In some embodiments, the desired quantity of water may be introduced into a mixer (*e.g.,* a cement blender) followed by the dry blend. The dry blend may comprise the CKD and additional solid additives, for example. Additional liquid additives, if any, may be added to the water as desired prior to, or after, combination with the dry blend. This mixture may be agitated for a sufficient period of time to form a base slurry. This base slurry may then be introduced into the well bore via pumps, for example. In the foamed embodiments, the base slurry may be pumped into the well bore, and a foaming agent may be metered into the base slurry followed by injection of a gas, *e.g.,* at a foam mixing "T," in an amount sufficient to foam the base slurry thereby forming a foamed spacer fluid, in accordance with embodiments of the present invention. After foaming, the foamed spacer fluid may be introduced into a well bore. As will be appreciated by those of ordinary skill in the art, with the benefit of this disclosure, other suitable techniques for preparing spacer fluids may be used in accordance with embodiments of the present invention.

An example method of the present invention includes a method of enhancing rheological properties of a spacer fluid. The method may comprise including CKD in a spacer fluid. The CKD may be included in the spacer fluid in an amount sufficient to provide a higher yield point than a first fluid. The higher yield point may be desirable, for example, to effectively displace the first fluid from the well bore. As used herein, the term "yield point" refers to the resistance of a fluid to initial flow, or representing the stress required to start fluid movement. In an embodiment, the yield point of the spacer fluid at a temperature of up to about 180°F (82° C) is greater than about 5 lb/100 ft² (0.24 kg/m²). In an embodiment, the yield point of the spacer fluid at a temperature of up to about 180°F is greater than about 10 lb/100 ft² (0.49 kg/m²). In an embodiment, the yield point of the spacer fluid at a temperature of up to about 180°F is greater than about 20 lb/100 ft² (0.98 kg/m²). It may be desirable for the spacer fluid to not thermally thin to a yield point below the first fluid at elevated temperatures. Accordingly, the spacer fluid may have a higher yield point than the first fluid at elevated temperatures, such as 180° F (82° C) or bottom hole static temperature ("BHST"). In one embodiment, the spacer fluid may have a yield point that increases at elevated temperatures. For example, the spacer fluid may have a yield point that is higher at 180° F (82° C) than at 80° F (27° C). By way of further example. The spacer fluid may have a yield point that is higher at BHST than at 80° F.(27° C).

Another example method of the present invention includes a method of displacing a first fluid from a well bore, the well bore penetrating a subterranean formation. The method may comprise providing a spacer fluid that comprises CKD and water. The method may further comprise introducing the spacer fluid into the well bore to displace at least a portion of the first fluid from the well bore. In some embodiments, the spacer fluid may be characterized by having a higher yield point than the first fluid at 80°F (27°C). In some embodiments, the spacer fluid may be characterized by having a higher yield point than the first fluid at 130°F (54°C). In some embodiments, the spacer fluid may be characterized by having a higher yield point than the first fluid at 180°F (82°C).

In an embodiment, the first fluid displaced by the spacer fluid comprises a drilling fluid. By way of example, the spacer fluid may be used to displace the drilling fluid from the well bore. The drilling fluid may include, for example, any number of fluids, such as solid suspensions, mixtures, and emulsions. Additional steps in embodiments of the method may comprise introducing a pipe string into the well bore, introducing a cement composition into the well bore with the spacer fluid separating the cement composition and the first fluid. In an embodiment, the cement composition may be allowed to set in the well bore. The cement composition may include, for example, cement and water.

Another example method of the present invention includes a method of separating fluids in a well bore, the well bore penetrating a subterranean formation. The method may comprise introducing a spacer fluid into the well bore, the well bore having a first fluid disposed therein. The spacer fluid may comprise, for example, CKD and water. The method may further comprise introducing a second fluid into the well bore with the spacer fluid separating the first fluid and the second fluid. In an embodiment, the first fluid comprises a drilling fluid and the second fluid comprises a cement composition. By way of example, the spacer fluid may prevent the cement composition from contacting the drilling fluid. In an embodiment, the cement composition comprises cement kiln dust, water, and optionally a hydraulic cementitious material. A variety of hydraulic cements may be utilized in accordance with the present invention, including, but not limited to, those comprising calcium, aluminum, silicon, oxygen, iron, and/or sulfur, which set and harden by reaction with water. Suitable hydraulic cements include, but are not limited to, Portland cements, pozzolana cements, gypsum cements, high alumina content cements, slag cements, silica cements, and combinations thereof. In certain embodiments, the hydraulic cement may comprise a Portland cement. In some embodiments, the Portland cements that are suited for use in the present invention are classified as Classes A, C, H, and G cements according to American Petroleum Institute, API Specification for Materials and Testing for Well Cements, API Specification 10, Fifth Ed., Jul. 1, 1990. The spacer fluid may also remove the drilling fluid, dehydrated/gelled drilling fluid, and/or filter cake solids from the well bore in advance of the cement composition. Removal of these compositions from the well bore may enhance bonding of the cement composition to surfaces in the well bore. In an additional embodiment, at least a portion of used and/or unused CKD containing spacer fluid are included in the cement composition that is placed into the well and allowed to set.

To facilitate a better understanding of the present invention, the following examples of certain aspects of some embodiments are given. In no way should the following examples be read to limit, or define, the scope of the invention. In the following examples, concentrations are given in weight percent of the overall composition.

### EXAMPLE 1

Sample spacer fluids were prepared to evaluate the rheological properties of spacer fluids containing CKD. The sample spacer fluids were prepared as follows. First, all dry components (e.g., CKD, fly ash, bentonite, FWCA, etc.) were weighed into a glass container having a clean lid and agitated by hand until blended. Tap water was then weighed into a Waring blender jar. The dry components were then mixed into the water with 4,000 rpm stirring. The blender speed was then increased to 12,000 rpm for about 35 seconds.

Sample Spacer Fluid No. 1 was an 11 pound per gallon (1.3 kg/l) slurry that comprised 60.62% water, 34.17% CKD, 4.63% fly ash, and 0.58% free water control additive (WG-17™ solid additive).

Sample Spacer Fluid No. 2 was an 11 pound per gallon (1.3 kg/l) slurry that comprised 60.79% water, 30.42% CKD, 4.13% fly ash, 0.17% free water control additive (WG-17™ solid additive), 3.45% bentonite, and 1.04% Econolite™ additive.

Rheological values were then determined using a Fann Model 35 Viscometer. Dial readings were recorded at speeds of 3, 6, 100, 200, and 300 with a B1 bob, an R1 rotor, and a 1.0 spring. The dial readings, plastic viscosity, and yield points for the spacer fluids were measured in accordance with API Recommended Practices 10B, Bingham plastic model and are set forth in the table below. The abbreviation "PV" refers to plastic viscosity, while the abbreviation "YP" refers to yield point.

**TABLE 1**

| **Sample Fluid** | **Temp. (°F) [°C]** | **Viscometer RPM** | | | | | **PV (mPa/s)** | **YP (lb/ 100 ft²⁾** [kg/m²] |
|---|---|---|---|---|---|---|---|---|
| | | **300** | **200** | **100** | **6** | **3** | | |
| 1 | 80 [27] | 145 | 127 | 90 | 24 | 14 | 113.3 | 27.4 [1.34] |
| | 180 [82] | 168 | 143 | 105 | 26 | 15 | 154.5 | 30.3 [1.48] |
| 2 | 80 [27] | 65 | 53 | 43 | 27 | 22 | 41.1 | 26.9 [1.31] |
| | 180 [82] | 70 | 61 | 55 | 22 | 18 | 51.6 | 25.8 [1.26] |

The thickening time of the Sample Spacer Fluid No. 1 was also determined in accordance with API Recommended Practice 10B at 205° F (96°C). Sample Spacer Fluid No. 1 had a thickening time of more than 6:00+ hours at 35 Bc.

Accordingly, the above example illustrates that the addition of CKD to a spacer fluid may provide suitable properties for use in subterranean applications. In particular, the above example illustrates, *inter alia,* that CKD may be used to provide a spacer fluid that may not exhibit thermal thinning with the spacer fluid potentially even having a yield point that increases with temperature. For example, Sample Spacer Fluid No. 2 had a higher yield point at 180° F than at 80° F. In addition, the yield point of Sample Spacer Fluid No. 1 had only a slight decrease at 180° F as compared to 80° F. Even further, the example illustrates that addition of CKD to a spacer fluid may provide a plastic viscosity that increases with temperature.

### EXAMPLE 2

Additional sample spacer fluids were prepared to further evaluate the rheological properties of spacer fluids containing CKD. The sample spacer fluids were prepared as follows. First, all dry components (e.g., CKD, fly ash) were weighed into a glass container having a clean lid and agitated by hand until blended. Tap water was then weighed into a Waring blender jar. The dry components were then mixed into the water with 4,000 rpm stirring. The blender speed was then increased to 12,000 rpm for about 35 seconds.

Sample Fluid No. 3 was a 12.5 pound per gallon (1.5 kg/l) fluid that comprised 47.29% water and 52.71 % CKD.

Sample Fluid No. 4 was a 12.5 pound per gallon (1.5 kg/l) fluid that comprised 46.47% water, 40.15% CKD, and 13.38% fly ash.

Sample Fluid No. 5 was a 12.5 pound per gallon (1.5 kg/l) fluid that comprised 45.62% water, 27.19% CKD, and 27.19% fly ash.

Sample Fluid No. 6 was a 12.5 pound per gallon (1.5 kg/l) fluid that comprised 44.75% water, 13.81 % CKD, and 41.44% fly ash.

Sample Fluid No. 7 (comparative) was a 12.5 pound per gallon (1.5 kg/l) fluid that comprised 43.85% water, and 56.15% fly ash.

Rheological values were then determined using a Fann Model 35 Viscometer. Dial readings were recorded at speeds of 3, 6, 30, 60, 100, 200, 300, and 600 with a B1 bob, an R1 rotor, and a 1.0 spring. The dial readings, plastic viscosity, and yield points for the spacer fluids were measured in accordance with API Recommended Practices 10B, Bingham plastic model and are set forth in the table below. The abbreviation "PV" refers to plastic viscosity, while the abbreviation "YP" refers to yield point.

**TABLE 2**

| **Sample Spacer Fluid** | **CKD-Fly Ash Ratio** | **Temp. (°F) [°C]** | **Viscometer RPM** | | | | | | | | **PV (mPa /s)** | **YP (lb/ 100 ft²⁾** [kg/m²] |
|---|---|---|---|---|---|---|---|---|---|---|---|---|
| | | | **600** | **300** | **200** | **100** | **60** | **30** | **6** | **3** | | |
| 3 | 100:0 | 80 [27] | 33 | 23 | 20 | 15 | 13 | 12 | 8 | 6 | 12 | 11 [0.54] |
| | | 130 [54] | 39 | 31 | 27 | 23 | 22 | 19 | 16 | 11 | 12 | 19 [0.93] |
| | | 180 [82] | 66 | 58 | 51 | 47 | 40 | 38 | 21 | 18 | 16.5 | 41.5 [2.03] |
| 4 | 75:25 | 80 [27] | 28 | 22 | 19 | 15 | 14 | 11 | 8 | 6 | 10.5 | 11.5 [0.56] |
| | | 130 [54] | 39 | 28 | 25 | 21 | 19 | 16 | 14 | 11 | 10.5 | 17.5 [0.85] |
| | | 180 [82] | 51 | 39 | 36 | 35 | 31 | 26 | 16 | 11 | 6 | 33 [1.6] |
| 5 | 50:50 | 80 [27] | 20 | 11 | 8 | 6 | 5 | 4 | 4 | 3 | 7.5 | 3.5 [0.17] |
| | | 130 [54] | 21 | 15 | 13 | 10 | 9 | 8 | 6 | 5 | 7.5 | 7.5 [0.37] |
| | | 180 [82] | 25 | 20 | 17 | 14 | 13 | 12 | 7 | 5 | 9 | 11 [0.54] |
| 6 | 25:75 | 80 [27] | 16 | 8 | 6 | 3 | 2 | 1 | 0 | 0 | 7.5 | 0.5 [0.02] |
| | | 130 [54] | 15 | 8 | 6 | 4 | 3 | 2 | 1 | 1 | 6 | 2 [0.1] |
| | | 180 [82] | 15 | 9 | 7 | 5 | 4 | 4 | 2 | 2 | 6 | 3 [0.15] |
| 7 (Comp.) | 0:100 | 80 [27] | 16 | 7 | 5 | 3 | 1 | 0 | 0 | 0 | 6 | 1 [0.05] |
| | | 130 [54] | 11 | 4 | 3 | 1 | 0 | 0 | 0 | 0 | 4.5 | -0.5 [-0.02] |
| | | 180 [82] | 8 | 3 | 2 | 0 | 0 | 0 | 0 | 0 | 4.5 | -1.5 [-0.07] |

Accordingly, the above example illustrates that the addition of CKD to a spacer fluid may provide suitable properties for use in subterranean applications. In particular, the above example illustrates, *inter alia,* that CKD may be used to provide a spacer fluid that may not exhibit thermal thinning with the spacer fluid potentially even having a yield point that increases with temperature. In addition, as illustrated in Table 2 above, higher yield points were observed for spacer fluids with higher concentrations of CKD.

### EXAMPLE 3

A sample spacer fluid containing CKD was prepared to compare the rheological properties of a spacer fluid containing CKD with an oil-based drilling fluid. The sample spacer fluid was prepared as follows. First, all dry components (*e.g.,* CKD, fly ash, bentonite, etc.) were weighed into a glass container having a clean lid and agitated by hand until blended. Tap water was then weighed into a Waring blender jar. The dry components were then mixed into the water with 4,000 rpm stirring. The blender speed was then increased to 12,000 rpm for about 35 seconds.

Sample Spacer Fluid No. 8 was an 11 pound per gallon (1.3 kg/l) slurry that comprised 60.79% water, 30.42% CKD, 4.13% fly ash, 0.17% free water control additive (WG-17™ solid additive), 3.45% bentonite, and 1.04% Econolite™ additive.

The oil-based drilling fluid was a 9.1 (1.1 kg/l) pound per gallon oil-based mud.

Rheological values were then determined using a Fann Model 35 Viscometer. Dial readings were recorded at speeds of 3, 6, 100, 200, and 300 with a B1 bob, an R1 rotor, and a 1.0 spring. The dial readings, plastic viscosity, and yield points for the spacer fluid and drilling fluid were measured in accordance with API Recommended Practices 10B, Gingham plastic model and are set forth in the table below. The abbreviation "PV" refers to plastic viscosity, while the abbreviation "YP" refers to yield point. The abbreviation "OBM" refers to oil-based mud.

**TABLE 3**

| **Sample Fluid** | **Temp. (°F) [°C]** | **Viscometer RPM** | | | | | **PV (mPa/s)** | **YP (Ib/100 ft²⁾** [kg/m²] |
|---|---|---|---|---|---|---|---|---|
| | | **300** | **200** | **100** | **6** | **3** | | |
| 8 | 80 [27] | 59 | 50 | 39 | 22 | 15 | 42 | 21.2 [1.035] |
| | 180 [82] | 82 | 54 | 48 | 16 | 13 | 65.3 | 17 [0.83] |
| OBM | 80 [27] | 83 | 64 | 41 | 11 | 10 | 74.6 | 12.1 [0.59] |
| | 180 [82] | 46 | 35 | 23 | 10 | 10 | 36.7 | 10.5 [0.51] |

Accordingly, the above example illustrates that the addition of CKD to a spacer fluid may provide suitable properties for use in subterranean applications. In particular, the above example illustrates, *inter alia,* that CKD may be used to provide a spacer fluid with a yield point that is greater than a drilling fluid even at elevated temperatures. For example, Sample Spacer Fluid No. 8 has a higher yield point at 180° F (82°C) than the oil-based mud.

### EXAMPLE 4

A foamed spacer fluid was prepared that comprised CKD. First, a base slurry was prepared that had a density of 10 lb/gal (1.2 kg/l) and comprised CKD, a free water control additive (0.7% by weight of CKD), a lightweight additive (4% by weight of CKD), and fresh water (32.16 gallons per 94-pound sack of CKD). The free water control additive was SA-1015™ suspending aid. The lightweight additive was ECONOLITE™ additive. Next, a foaming agent (FOAMER™ 760 foamer/stabilizer) in an amount of 2% bvow was added, and the base slurry was then mixed in a foam blending jar for 4 seconds at 12,000 rpm. The resulting foamed spacer fluid had a density of 8.4 lb/gal (1 kg/l). The "sink" of the resultant foamed spacer fluid was then measured using a free fluid test procedure as specified in API Recommended Practice 10B. However, rather than measuring the free fluid, the amount of "sink" was measured after the foamed spacer fluid remained static for a period of 2 hours. The foamed spacer fluid was initially at 200°F (93°C) and cooled to ambient temperature over the 2-hour period. The measured sink for this foamed spacer fluid was 5 millimeters.

### EXAMPLE 5

Another foamed spacer fluid was prepared that comprised CKD. First, a base slurry was prepared that had a density of 10.5 lb/gal (1.26 kg/l) and comprised CKD, a free water control additive (0.6% by weight of CKD), a lightweight additive (4% by weight of CKD), and fresh water (23.7 gallons per 94-pound sack (90 1 per 43 kg) of CKD). The free water control additive was SA-1015™ suspending aid. The lightweight additive was ECONOLITE™ additive. Next, a foaming agent (a hexylene glycol/cocobetaine blended surfactant) in an amount of 2% bvow was added, and the base slurry was then mixed in a foam blending jar for 6 seconds at 12,000 rpm. The resulting foamed spacer fluid had a density of 8.304 lb/gal (0.995 kg/l). The resultant foamed spacer fluid had a sink of 0 millimeters, measured as described above for Example 4.

Therefore, the present invention is well adapted to attain the ends and advantages mentioned as well as those that are inherent therein. Although individual embodiments are discussed, the invention covers all combinations of all those embodiments. Also, the terms in the claims have their plain, ordinary meaning unless otherwise explicitly and clearly defined by the patentee.

## Claims

1. A method comprising:
providing a foamed spacer fluid comprising cement kiln dust, a foaming agent, a gas, and water; and
introducing the foamed spacer fluid into a well bore to displace at least a portion of a first fluid present in the well bore wherein the yield point of the foamed spacer fluid at 180°F (82°C) is greater than 20 lb/100 ft² (0.98 kg/m²).

2. A method according to claim 1 wherein the cement kiln dust is present in the foamed spacer fluid in an amount in a range of from 1% to 60% by weight of the foamed spacer fluid.

3. A method according to claim 1 or claim 2 wherein the cement kiln dust is present in the foamed spacer fluid in an amount in a range of from 80% to 100% by weight of dry solids.

4. A method according to any one of the preceding claims wherein the foamed spacer fluid has a yield point at 80°F (27°C) that is higher than a yield point of the first fluid at 80°F (27°C).

5. A method according to any one of the preceding claims wherein the foamed spacer fluid has a yield point at 180°F (82°C) that is higher than a yield point of the first fluid at 180°F (82°C).

6. A method according to any one of the preceding claims wherein the foamed spacer fluid has a higher yield point at bottom hole static temperature of the well bore than at 80°F (27°C).

7. A method according to any one of the preceding claims wherein the foamed spacer fluid has a density in a range of from 4 lb/gal (479 kg/m³) to 13 lb/gal (1560 kg/m³).

8. A method according to any one of the preceding claims wherein providing the foamed spacer fluid comprises foaming a base slurry from a density in a range of from 9 lb/gal (1080 kg/m³) to 13 lb/gal (1560 kg/m³) to a density in a range of from 7 lb/gal (839 kg/m³) to 9 lb/gal (1080 kg/m³).

9. A method according to claim 8 wherein foaming the base slurry comprises providing a base slurry comprising the cement kiln dust, a lightweight additive, a free water control additive, and the water; and adding the foaming agent to the base slurry.

10. A method according to any one of the preceding claims wherein the gas comprises at least one gas selected from the group consisting of air, nitrogen, and any combination thereof, and wherein the foaming agent comprises at least one additive selected from the group consisting of a mixture of an ammonium salt of an alkyl ether sulfate, a cocoamidopropyl betaine surfactant, a cocoamidopropyl dimethylamine oxide surfactant, sodium chloride, and water; a mixture of an ammonium salt of an alkyl ether sulfate surfactant, a cocoamidopropyl hydroxysultaine surfactant, a cocoamidopropyl dimethylamine oxide surfactant, sodium chloride, and water; hydrolyzed keratin; a mixture of an ethoxylated alcohol ether sulfate surfactant, an alkyl or alkene amidopropyl betaine surfactant, and an alkyl or alkene dimethylamine oxide surfactant; an aqueous solution of an alpha-olefinic sulfonate surfactant and a betaine surfactant; and any combination thereof.

11. A method according to any one of the preceding claims wherein the foamed spacer fluid further comprises at least one additive selected from the group consisting of a free water control additive, a lightweight additive, a weighting agent, a viscosifying agent, a fluid loss control additive, a lost circulation material, a filtration. control additive, a dispersant, a corrosion inhibitor, a scale inhibitor, a formation conditioning agent, and any combination thereof.

12. A method according to any one of the preceding claims wherein the foamed spacer fluid further comprises at least one additive selected from the group consisting of fly ash, a clay, a hydratable polymer, guar gum, an organic polymer, a surfactant, crystalline silica, amorphous silica, fumed silica, a salt, a fiber, hydratable clay, a microsphere, rice husk ash, and any combination thereof.

13. A method according to any one of the preceding claims wherein the first fluid comprises a drilling fluid.

14. A method according to claim 13 further comprising introducing a cement composition into the well bore to displace at least a portion of the spacer fluid present in the well bore, wherein the spacer fluid separates the cement composition from the drilling fluid.

15. A method according to any one of the preceding claims further comprising introducing a cement composition into the well bore to displace at least a portion of the spacer fluid present in the well bore, wherein the cement composition comprises cement kiln dust.

## Patentansprüche

1. Verfahren, umfassend:
Bereitstellen eines geschäumten Trennfluids, das Zementofenstaub, ein Schaummittel, ein Gas und Wasser umfasst; und
Einführen des geschäumten Trennfluids in ein Bohrloch, um wenigstens einen Teil eines ersten in dem Bohrloch vorhandenen Fluids zu verdrängen, wobei der Fließpunkt des geschäumten Trennfluids bei 180 °F (82 °C) größer als 20 lb/100 ft² (0,98 kg/m²) ist.

2. Verfahren nach Anspruch 1, wobei der Zementofenstaub in dem geschäumten Trennfluid in einer Menge in einem Bereich von 1 Gew.-% bis 60 Gew.-% des geschäumten Trennfluids vorhanden ist.

3. Verfahren nach Anspruch 1 oder Anspruch 2, wobei der Zementofenstaub in dem geschäumten Trennfluid in einer Menge in einem Bereich von 80 Gew.-% bis 100 Gew.-% der Trockenfeststoffe vorhanden ist.

4. Verfahren nach einem der vorhergehenden Ansprüche, wobei das geschäumte Trennfluid einen Fließpunkt bei 80 °F (27 °C) aufweist, der höher als der Fließpunkt des ersten Fluids bei 80 °F (27 °C) ist.

5. Verfahren nach einem der vorhergehenden Ansprüche, wobei das geschäumte Trennfluid einen Fließpunkt bei 180 °F (82 °C) aufweist, der höher als der Fließpunkt des ersten Fluids bei 180 °F (82 °C) ist.

6. Verfahren nach einem der vorhergehenden Ansprüche, wobei das geschäumte Trennfluid einen höheren Fließpunkt bei statischer Bohrungstemperatur des Bohrlochs aufweist, als bei 80 °F (27 °C).

7. Verfahren nach einem der vorhergehenden Ansprüche, wobei das geschäumte Trennfluid eine Dichte in einem Bereich von 4 lb/gal (479 kg/m³) bis 13 lb/gal (1560 kg/m³) aufweist.

8. Verfahren nach einem der vorhergehenden Ansprüche, wobei das Bereitstellen des geschäumten Trennfluids Aufschäumen einer Basisaufschlämmung von einer Dichte in einem Bereich von 9 lb/gal (1080 kg/m³) bis 13 lb/gal (1560 kg/m³) auf eine Dichte in einem Bereich von 7 lb/gal (839 kg/m³) bis 9 lb/gal (1080 kg/m³) umfasst.

9. Verfahren nach Anspruch 8, wobei das Aufschäumen der Basisaufschlämmung Bereitstellen einer Basisaufschlämmung, umfassend Zementofenstaub, einen leichtgewichtigen Zusatzstoff, eines Zusatzstoffs zur Kontrolle freien Wassers und das Wasser; und Zugeben des Aufschäumungsmittels zu der Basisaufschlämmung umfasst.

10. Verfahren nach einem der vorhergehenden Ansprüche, wobei das Gas wenigstens ein Gas ausgewählt aus der Gruppe bestehend aus Luft, Stickstoff und einer beliebigen Kombination davon umfasst, und wobei das Aufschäummittel wenigstens einen Zusatzstoff ausgewählt aus der Gruppe bestehend aus einem Gemisch aus einem Ammoniumsalz eines Alkylethersulfats, einem Cocoamidopropylbetain-Tensid, einem Cocoamidopropyldimethylaminoxid-Tensid, Natriumchlorid und Wasser; einem Gemisch aus einem Ammoniumsalz eines Alkylethersulfat-Tensids, einem Cocoamidopropylhydroxysultain-Tensid, einem Cocoamidopropyldimethylaminoxid-Tensid, Natriumchlorid und Wasser; hydrolysiertem Keratin; einem Gemisch aus einem ethoxylierten Alkoholethersulfat-Tensid, einem Alkyl- oder Alkenamidopropylbetain-Tensid und einem Alkyl- oder Alkendimethylaminoxid-Tensid; einer wässrigen Lösung eines alpha-olefinischen Sulfonat-Tensids und eines Betain-Tensids; und einer beliebigen Kombination davon umfasst.

11. Verfahren nach einem der vorhergehenden Ansprüche, wobei das geschäumte Trennfluid weiter wenigstens einen Zusatzstoff ausgewählt aus der Gruppe bestehend aus einem Zusatzstoff zur Kontrolle freien Wassers, einem leichtgewichtigen Zusatzstoff, einem Gewichtungsmittel, einem Verdickungsmittel, einem Zusatzstoff zur Kontrolle von Fluidverlust, einem Zirkulationsverlustmaterial, einem Filtrationskontrollzusatzstoff, einem Dispersionsmittel, einem Korrosionsinhibitor, einem Ablagerungsinhibitor, einem Formationskonditionierungsmittel und einer beliebige Kombination davon umfasst.

12. Verfahren nach einem der vorhergehenden Ansprüche, wobei das geschäumte Trennfluid weiter wenigstens einen Zusatzstoff ausgewählt aus der Gruppe bestehend einer Flugasche, einem Ton, einem hydratisierbaren Polymer, Guargummi, einem organischen Polymer, einem Tensid, kristallinem Siliciumdioxid, amorphem Siliciumdioxid, pyrogener Kieselsäure, einem Salz, einer Faser, hydratisierbarem Ton, einem Mikrokügelchen, Reisschalenasche und einer beliebigen Kombination davon umfasst.

13. Verfahren nach einem der vorhergehenden Ansprüche, wobei das erste Fluid ein Bohrfluid umfasst.

14. Verfahren nach Anspruch 13, weiter umfassend Einbringen einer Zementzusammensetzung in das Bohrloch, um wenigstens einen Teil des in dem Bohrloch vorhandenen Trennfluids zu verdrängen, wobei das Trennfluid die Zementzusammensetzung von dem Bohrfluid trennt.

15. Verfahren nach einem der vorhergehenden Ansprüche, weiter umfassend Einbringen einer Zementzusammensetzung in das Bohrloch, um wenigstens einen Teil des in dem Bohrloch vorhandenen Trennfluids zu verdrängen, wobei die Zementzusammensetzung Zementofenstaub umfasst.

## Revendications

1. Procédé comprenant :
la fourniture d'un fluide mousse d'écartement comprenant une poussière de four à ciment, un agent moussant, un gaz et de l'eau ; et
l'introduction du fluide mousse d'écartement dans un puits de forage pour déplacer au moins une partie d'un premier fluide présent dans le puits de forage dans lequel la limite d'élasticité du fluide mousse d'écartement à 82 °C (180 °F) est supérieure à 0,98 kg/m² (20 lb/100 pi²).

2. Procédé selon la revendication 1, dans lequel la poussière de four à ciment est présente dans le fluide mousse d'écartement dans une quantité comprise dans une plage de 1 % à 60 % en poids du fluide mousse d'écartement.

3. Procédé selon la revendication 1 ou la revendication 2, dans lequel la poussière de four à ciment est présente dans le fluide mousse d'écartement dans une quantité comprise dans une plage de 80 % à 100 % en poids de matières sèches.

4. Procédé selon l'une quelconque des revendications précédentes, dans lequel le fluide mousse d'écartement a une limite d'élasticité à 27 °C (80 °F) qui est supérieure à une limite d'élasticité du premier fluide à 27 °C (80 °F).

5. Procédé selon l'une quelconque des revendications précédentes, dans lequel le fluide mousse d'écartement a une limite d'élasticité à 82 °C (180 °F) qui est supérieure à une limite d'élasticité du premier fluide à 82 °C (180 °F).

6. Procédé selon l'une quelconque des revendications précédentes, dans lequel le fluide mousse d'écartement a une limite d'élasticité supérieure à une température statique de fond de puits du puits de forage qu'à 27 °C (80 °F).

7. Procédé selon l'une quelconque des revendications précédentes, dans lequel le fluide mousse d'écartement a une masse volumique dans une plage de 479 kg/m³ (4 lb/gal) à 1 560 kg/m³ (13 lb/gal).

8. Procédé selon l'une quelconque des revendications précédentes, dans lequel la fourniture du fluide mousse d'écartement comprend le moussage d'une boue de base d'une masse volumique dans une plage de 1 080 kg/m³ (9 lb/gal) à 1 560 kg/m³ (13 lb/gal) à une masse volumique dans une plage de 839 kg/m³ (7 lb/gal) à 1 080 kg/m³ (9 lb/gal).

9. Procédé selon la revendication 8, dans lequel le moussage de la boue de base comprend la fourniture d'une boue de base comprenant la poussière de four à ciment, un additif léger, un additif de contrôle d'eau libre et de l'eau ; et l'ajout de l'agent moussant à la boue de base.

10. Procédé selon l'une quelconque des revendications précédentes, dans lequel le gaz comprend au moins un gaz choisi dans le groupe consistant en de l'air, de l'azote, et l'une quelconque de leurs combinaisons, et dans lequel l'agent moussant comprend au moins un additif choisi dans le groupe consistant en un mélange d'un sel d'ammonium d'un alkyl éther sulfate, d'un tensioactif cocoamidopropyle bétaïne, d'un tensioactif oxyde de cocoamidopropyle diméthylamine, de chlorure de sodium, et d'eau ; un mélange d'un sel d'ammonium d'un tensioactif alkyl éther sulfate, d'un tensioactif cocoamidopropyle hydroxysultaïne, d'un tensioactif oxyde de cocoamidopropyle diméthylamine, de chlorure de sodium et d'eau ; de kératine hydrolysée ; un mélange d'un tensioactif alcool éther sulfate éthoxylé, d'un tensioactif alkyl ou alcène amidopropyl bétaïne, et d'un tensioactif oxyde d'alkyl ou d'alcène diméthylamine ; une solution aqueuse d'un tensioactif sulfonate alpha-oléfinique et d'un tensioactif bétaïne ; et l'une quelconque de leurs combinaisons.

11. Procédé selon l'une quelconque des revendications précédentes, dans lequel le fluide mousse d'écartement comprend en outre au moins un additif choisi dans le groupe consistant en un additif de contrôle d'eau libre, un additif léger, un agent alourdissant, un agent viscosifiant, un additif de contrôle de perte de fluide, un additif de perte de circulation, un additif de contrôle de filtration, un dispersant, un inhibiteur de corrosion, un inhibiteur de tartre, un agent de conditionnement de formation, et l'une quelconque de leurs combinaisons.

12. Procédé selon l'une quelconque des revendications précédentes, dans lequel le fluide mousse d'écartement comprend en outre au moins un additif choisi dans le groupe consistant en la cendre volante, une argile, un polymère hydratable, la gomme de guar, un polymère organique, un tensioactif, la silice cristalline, la silice amorphe, la silice fumée, un sel, une fibre, l'argile hydratable, une microsphère, la cendre de balle de riz et l'une quelconque de leurs combinaisons.

13. Procédé selon l'une quelconque des revendications précédentes, dans lequel le premier fluide comprend un fluide de forage.

14. Procédé selon la revendication 13, comprenant en outre l'introduction d'une composition de ciment dans le puits de forage pour déplacer au moins une partie du fluide d'écartement présent dans le puits de forage, dans lequel le fluide d'écartement sépare la composition de ciment du fluide de forage.

15. Procédé selon l'une quelconque des revendications précédentes, comprenant en outre l'introduction d'une composition de ciment dans le puits de forage pour déplacer au moins une partie du fluide d'écartement présent dans le puits de forage, dans lequel la composition de ciment comprend de la poussière de four à ciment.
